# EUROPÄISCHE PATENTANMELDUNG

(11) **EP 3 550 128 A1**
(43) Veröffentlichungstag der Anmeldung: **09.10.2019**
(21) Anmeldenummer: 19166978.7
(22) Anmeldetag: 03.04.2019
(51) Int. Cl.: F02D 19/06, F02D 41/00, F02D 41/26

(54) **VERFAHREN ZUM BETREIBEN EINER VERBRENNUNGSKRAFTMASCHINE EINES ANTRIEBSSYSTEMS FÜR EIN KRAFTFAHRZEUG, ANTRIEBSSYSTEM UND KRAFTFAHRZEUG**

(30) Priorität: 05.04.2018 DE 102018108097
(71) Anmelder: VOLKSWAGEN AKTIENGESELLSCHAFT, 38440 Wolfsburg (DE)
(72) Erfinder: Leineweber, Daniel, 38100 Braunschweig (DE); Schröder, Ulrich, 38104 Braunschweig (DE); Dierschke, Christian, 38690 Goslar (DE); Tomforde, Michael, 38518 Gifhorn (DE); Forst, Johannes, 30455 Hannover (DE)
(74) Vertreter: Patentanwälte Bals & Vogel

(57) **Zusammenfassung**

Die Erfindung betrifft ein Verfahren zum Betreiben einer Verbrennungskraftmaschine (1) eines Antriebssystems (2) für ein Kraftfahrzeug (3), wobei die Verbrennungskraftmaschine (1) für den Betrieb mit verschiedenen Kraftstoffarten ausgebildet ist, aufweisend die folgenden Schritte:
- Abfragen von Betriebsparametern kraftstoffartrelevanter Funktionen (4) des Antriebssystems (2) mittels einer zentralen Kraftstoffkoordinationsvorrichtung (5) einer zentralen Motorkoordinationsvorrichtung (6),
- Ermitteln möglicher Kraftstoffarten zum Betreiben der Verbrennungskraftmaschine (1) auf Basis der abgefragten Betriebsparameter und vordefinierter Kraftstoff-Freigabebedingungen mittels der zentralen Kraftstoffkoordinationsvorrichtung (5),
- Auswahl einer Kraftstoffart zum Betreiben der Verbrennungskraftmaschine (1) auf Basis der ermittelten möglichen Kraftstoffarten sowie mindestens eines vordefinierten Auswahlkriteriums mittels der zentralen Kraftstoffkoordinationsvorrichtung (5),
- Übermitteln einer die ausgewählte Kraftstoffart bezeichnenden Information von der zentralen Kraftstoffkoordinationsvorrichtung (5) an eine zentrale Motorsteuerungsvorrichtung (7) der zentralen Motorkoordinationsvorrichtung (6), und
- Betreiben der Verbrennungskraftmaschine (1) mit der ausgewählten Kraftstoffart mittels der zentralen Motorsteuerungsvorrichtung (7).

Ferner betrifft die Erfindung ein Antriebssystem (2) für ein Kraftfahrzeug (3) und ein Kraftfahrzeug (3).

## Beschreibung

Die vorliegende Erfindung betrifft ein Verfahren zum Betreiben einer Verbrennungskraftmaschine eines Antriebssystems für ein Kraftfahrzeug. Ferner betrifft die Erfindung ein Antriebssystem für ein Kraftfahrzeug, aufweisend eine Verbrennungskraftmaschine und eine zentrale Motorkoordinationsvorrichtung zum Betreiben der Verbrennungskraftmaschine, wobei die Verbrennungskraftmaschine für den Betrieb mit verschiedenen Kraftstoffarten ausgebildet ist. Schließlich betrifft die Erfindung ein Kraftfahrzeug, aufweisend ein Antriebssystem mit einer Verbrennungskraftmaschine und einer zentralen Motorkoordinationsvorrichtung zum Betreiben der Verbrennungskraftmaschine, wobei die Verbrennungskraftmaschine für den Betrieb mit verschiedenen Kraftstoffarten ausgebildet ist.

Um ständig steigenden Anforderungen, insbesondere im Hinblick auf Verbrauch, Emissionen und Wirtschaftlichkeit, gerecht zu werden, werden ständig neue Antriebskonzepte für Kraftfahrzeuge entwickelt. Als Alternative zu rein konventionellen Verbrennungskraftmaschinen oder Elektromotoren wurde die Hybridtechnologie entwickelt, gemäß welcher mindestens eine Verbrennungskraftmaschine mit einem Elektromotor kombiniert wird. Hierbei wird im Wesentlichen zwischen Microhybrid-, Mildhybrid- und Vollhybridfahrzeugen unterschieden.

Zudem werden Verbrennungskraftmaschinen entwickelt, welche zur Verbrennung unterschiedlicher Kraftstoffarten, wie zum Beispiel Erdgas, welches auch unter der Bezeichnung CNG bekannt ist, und einem flüssigen Kraftstoff, insbesondere einem Ottokraftstoff, wie Normalbenzin, Superbenzin oder dergleichen, ausgebildet sind. Derartige Verbrennungskraftmaschinen werden auch als bivalente Verbrennungskraftmaschinen bezeichnet und weisen Brennkammern auf, in welchen die verschiedenen Kraftstoffarten verfeuerbar sind. Zum Einbringen der Kraftstoffe in die Brennkammer weisen die Verbrennungskraftmaschinen für die verschiedenen Kraftstoffarten zumeist eigene Zuführvorrichtungen, wie zum Beispiel Einspritzventile für flüssigen Kraftstoff sowie Gasventile für gasförmigen Kraftstoff, auf. Gattungsgemäße Verbrennungskraftmaschinen sind beispielsweise in der DE 10 2006 025 259 A1, der DE 10 2008 023 306 A1 sowie der DE 10 2011 075 223 A1 offenbart.

Ferner weisen bekannte Verbrennungskraftmaschinen eine zentrale Motorsteuerungsvorrichtung zum Steuern der Kraftstoffzufuhr in die Brennkammer sowie peripherer Funktionen des Antriebssystems auf. Um eine Auswahl eines geeigneten Kraftstoffs für eine aktuelle Betriebssituation des Antriebssystems treffen zu können, muss die Motorsteuerungsvorrichtung mit den einzelnen kraftstoffartrelevanten Funktionen vernetzt werden. Die einzelnen kraftstoffartrelevanten Funktionen melden eine individuell durch die kraftstoffartrelevante Funktion bestimmte Kraftstoffartanforderung an die zentrale Motorsteuerungsvorrichtung, welche diese Kraftstoffartanforderungen auswertet und die Verbrennungskraftmaschine im Anschluss mit einer in diesem Betriebszustand für sämtliche kraftstoffartrelevante Funktionen kompatiblen Kraftstoffart betreibt. Bei widersprüchlichen Kraftstoffartanforderungen verschiedener Funktionen ist üblicherweise der Betrieb mit einem flüssigen Kraftstoff, insbesondere einem Ottokraftstoff, stets möglich.

Derartige Antriebssysteme haben den Nachteil, dass die Kraftstoffartanforderung dezentral in den jeweiligen kraftstoffartrelevanten Funktionen erfolgt. Die kraftstoffartrelevanten Funktionen müssen demnach über eine spezielle Softwareschnittstelle verfügen.

Es ist daher Aufgabe der vorliegenden Erfindung, die voranstehend beschriebenen Nachteile beim Betreiben einer Verbrennungskraftmaschine eines Antriebssystems für ein Kraftfahrzeug, bei einem Antriebssystem für ein Kraftfahrzeug sowie bei einem Kraftfahrzeug zu beheben oder zumindest teilweise zu beheben. Insbesondere ist es Aufgabe der vorliegenden Erfindung ein Verfahren, ein Antriebssystem und ein Kraftfahrzeug zu schaffen, die auf eine einfache und kostengünstige Art und Weise eine verbesserte Auswahl einer geeigneten Kraftstoffart sicherstellen und dabei eine Kommunikation zwischen den Komponenten des Antriebssystems erleichtern.

Voranstehende Aufgabe wird durch die Patentansprüche gelöst. Demnach wird die Aufgabe durch ein Verfahren zum Betreiben einer Verbrennungskraftmaschine eines Antriebssystems für ein Kraftfahrzeug mit den Merkmalen des unabhängigen Anspruchs 1, durch ein Antriebssystem für ein Kraftfahrzeug mit den Merkmalen des nebengeordneten Anspruchs 8 sowie durch ein Kraftfahrzeug mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Antriebssystem sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zum Betreiben einer Verbrennungskraftmaschine eines Antriebssystems für ein Kraftfahrzeug gelöst. Das Verfahren weist die folgenden Verfahrensschritte auf:
- Abfragen von Betriebsparametern kraftstoffartrelevanter Funktionen des Antriebssystems mittels einer zentralen Kraftstoffkoordinationsvorrichtung einer zentralen Motorkoordinationsvorrichtung,
- Ermitteln möglicher Kraftstoffarten zum Betreiben der Verbrennungskraftmaschine auf Basis der abgefragten Betriebsparameter und vordefinierter Kraftstoff-Freigabebedingungen mittels der zentralen Kraftstoffkoordinationsvorrichtung,
- Auswahl einer Kraftstoffart zum Betreiben der Verbrennungskraftmaschine auf Basis der ermittelten möglichen Kraftstoffarten sowie mindestens eines vordefinierten Auswahlkriteriums mittels der zentralen Kraftstoffkoordinationsvorrichtung,
- Übermitteln einer die ausgewählte Kraftstoffart bezeichnenden Information von der zentralen Kraftstoffkoordinationsvorrichtung an eine zentrale Motorsteuerungsvorrichtung der zentralen Motorkoordinationsvorrichtung, und
- Betreiben der Verbrennungskraftmaschine mit der ausgewählten Kraftstoffart mittels der zentralen Motorsteuerungsvorrichtung.

Unter verschiedenen Kraftstoffarten wird im Rahmen der Erfindung verstanden, dass sich die chemischen Zusammensetzungen wesentlich voneinander unterscheiden, wie zum Beispiel Erdgas, Wasserstoff, Ottokraftstoff und Dieselkraftstoff. E5 und E10 Ottokraftstoffe gelten demnach erfindungsgemäß als gleichartig.

Die zentrale Kraftstoffkoordinationsvorrichtung fragt Betriebsparameter kraftstoffartrelevanter Funktionen des Antriebssystems vorzugsweise direkt von den einzelnen kraftstoffartrelevanten Funktionen ab. Diese Abfrage kann beispielsweise in Form von Bits erfolgen. Dieser Vorgang wird vorzugsweise permanent oder wiederholt, insbesondere in regelmäßigen bzw. im Wesentlichen regelmäßigen Abständen, durchgeführt. Das Abfragen kann in Form von Pull-Abfragen und/oder Push-Abfragen, insbesondere bei einer Veränderung von Betriebsparametern der jeweiligen kraftstoffartrelevanten Funktion, erfolgen. Vorzugsweise werden die Betriebsparameter mehrerer, insbesondere sämtlicher, kraftstoffartrelevanter Funktionen abgefragt, um die Auswahl einer ungeeigneten Kraftstoffwahl zu vermeiden. Unter kraftstoffartrelevanten Funktionen werden im Rahmen der Erfindung Funktionen des Antriebssystems verstanden, welche eine Verwendbarkeit von Kraftstoffarten in Abhängigkeit ihrer Betriebsparameter beeinflussen. Dies kann sich beispielsweise derart äußern, dass eine kraftstoffartrelevante Funktion in einem Betriebszustand A nur mit einem Kraftstoff A und in einem Betriebszustand B mit Kraftstoff A oder einem Kraftstoff B oder alternativ nur mit Kraftstoff B ausführbar ist. Mit anderen Worten ist es vom Betriebszustand der kraftstoffartrelevanten Funktion abhängig, welche Kraftstoffart geeignet ist. Die kraftstoffartrelevanten Funktionen können beispielsweise primäre Funktionen, welche primär einen Einfluss auf den Betrieb der Verbrennungskraftmaschine ausüben, sekundäre Funktionen, welche einen eine Peripherie der Verbrennungskraftmaschine, wie zum Beispiel einen Abgastrakt, sowie Diagnosefunktionen des Antriebstrakts betreffen.

Auf Basis der abgefragten Betriebsparameter und vordefinierter Kraftstoff-Freigabebedingungen ermittelt die zentrale Kraftstoffkoordinationsvorrichtung mögliche Kraftstoffarten zum Betreiben der Verbrennungskraftmaschine. Dieser Vorgang wird vorzugsweise permanent oder wiederholt, insbesondere in regelmäßigen bzw. im Wesentlichen regelmäßigen Abständen, durchgeführt. Eine Kraftstoffart-Freigabebedingung definiert beispielsweise, bei welchen Betriebsparametern einer kraftstoffartrelevanten Funktion welche Kraftstoffarten mit dieser kraftstoffartrelevanten Funktion kompatibel sind. Es kann beispielsweise vorgesehen sein, dass eine Kraftstoffart über einen kompletten Betriebsbereich einer kraftstoffartrelevanten Funktion, während eine andere Kraftstoffart nur bei bestimmten Betriebsparametern dieser kraftstoffartrelevanten Funktion freigegeben ist. Auf diese Weise ermittelt die zentrale Kraftstoffkoordinationsvorrichtung für die einzelnen kraftstoffartrelevanten Funktionen die derzeit kompatiblen Kraftstoffarten.

Anschließend wählt die zentrale Kraftstoffkoordinationsvorrichtung aus den ermittelten möglichen Kraftstoffarten eine Kraftstoffart aus, welche in der Verbrennungskraftmaschine umgesetzt werden soll. Dieser Vorgang wird vorzugsweise permanent oder wiederholt, insbesondere in regelmäßigen bzw. im Wesentlichen regelmäßigen Abständen, durchgeführt. Hierbei berücksichtigt die zentrale Kraftstoffkoordinationsvorrichtung mindestens ein vordefiniertes Auswahlkriterium. Das vordefinierte Auswahlkriterium definiert beispielsweise, dass bei Kompatibilität sämtlicher kraftstoffartrelevanter Funktionen mit Kraftstoff A und Kraftstoff B, Kraftstoff B bevorzugt verwendbar ist, beispielsweise aufgrund eines höheren Wirkungsgrads der Verbrennungskraftmaschine, geringerer Emissionen der Verbrennungskraftmaschine, höherer Leistung der Verbrennungskraftmaschine oder dergleichen. Das vordefinierte Auswahlkriterium kann auch abhängig von Betriebsparametern und/oder Umgebungsvariablen des Kraftfahrzeugs, wie zum Beispiel Fahrzeuggeschwindigkeit, Kühlwassertemperatur, Verschleißzustand von Komponenten des Antriebssystems, Steigung, Landschaftsart oder dergleichen, sein. Auf diese Weise ermittelt die zentrale Kraftstoffkoordinationsvorrichtung eine bei den aktuellen Betriebsparametern bevorzugte Kraftstoffart.

Informationen, welche die ausgewählte Kraftstoffart bezeichnen, werden im Anschluss von der zentralen Kraftstoffkoordinationsvorrichtung an eine zentrale Motorsteuerungsvorrichtung der zentralen Motorkoordinationsvorrichtung übermittelt. Diese Übermittlung kann beispielsweise in Form von Bits bzw. eines Bits erfolgen. Dieser Vorgang wird vorzugsweise permanent oder wiederholt, insbesondere in regelmäßigen bzw. im Wesentlichen regelmäßigen Abständen, durchgeführt. Der zentralen Motorsteuerungsvorrichtung liegt somit eine konkrete Kraftstoffartvorgabe vor und ist ausgebildet, entsprechende Steuerungsprozesse, wie zum Beispiel an einer Einspritzvorrichtung für Kraftstoff, vorzunehmen. Schließlich wird die Verbrennungskraftmaschine mittels der zentralen Motorsteuerungsvorrichtung mit der ausgewählten Kraftstoffart betrieben.

Ein erfindungsgemäßes Verfahren zum Betreiben einer Verbrennungskraftmaschine eines Antriebssystems für ein Kraftfahrzeug hat gegenüber herkömmlichen Verfahren den Vorteil, dass mit einfachen Mitteln sowie auf eine kostengünstige Art und Weise eine Auswahl einer für aktuelle Betriebsparameter optimierten Kraftstoffart gewährleistet ist. Zudem ist eine komplizierte direkte Kommunikationsanbindung der Motorsteuerungsvorrichtung an die einzelnen kraftstoffartrelevanten Funktionen durch eine zentrale Bündelung über die zentrale Kraftstoffkoordinationsvorrichtung nicht mehr erforderlich. Die Integration neuer Kraftstoffarten in einem bestehenden Antriebssystem ist ebenfalls verbessert.

Gemäß einer bevorzugten Weiterentwicklung der Erfindung kann bei einem Verfahren vorgesehen sein, dass beim Abfragen der Betriebsparameter mittels der zentralen Kraftstoffkoordinationsvorrichtung als kraftstoffartrelevante Funktion eine Drosselklappe und/oder eine Nockenwelle und/oder ein Turbolader und/oder ein Einspritzsystem verwendet werden. Mittels einer Drosselklappe ist ein Luftmassenstrom angesaugter Frischluft regulierbar, um somit eine Menge des Verbrennungsgemisches im Zylinder gezielt zu steuern. Für unterschiedliche Kraftstoffarten sind unterschiedliche Luft-Kraftstoff-Mischungsverhältnisse erforderlich. Demnach kann die Drosselklappe eine Lage bzw. Stellung aufweisen, welche für mindestens eine Kraftstoffart nicht kompatibel ist. Ebenso verhält es sich bezüglich des Turboladers. Durch eine Erfassung der Betriebsparameter der Drosselklappe ist somit eine Auswahl einer geeigneten Kraftstoffart verbesserbar. Ferner kann die Nockenwelle beispielsweise eine Beschädigung aufweisen, sodass die Verbrennungskraftmaschine nur in einem Notbetrieb betreibbar ist. Der Notbetrieb hat den Vorteil, dass der Fahrer des Kraftfahrzeugs das Kraftfahrzeug beispielsweise noch zu einer Werkstatt fahren kann. Zudem kann vorgesehen sein, dass für den Notbetrieb eine Kraftstoffart besonders bevorzugt ist. Somit kann mittels der Ermittlung eines Betriebsparameters der Nockenwelle eine Auswahl der geeigneten Kraftstoffwahl verbessert werden. Das Einspritzsystem weist für unterschiedliche Kraftstoffarten vorzugsweise unterschiedliche Einspritzdüsen auf. Bei besonders tiefen Temperaturen kann es beispielsweise vorkommen, dass Einspritzdüsen bestimmter Kraftstoffarten, insbesondere gasförmiger Kraftstoffe, einfrieren, sodass die Verwendung einer alternativen Kraftstoffart bevorzugt ist. Folglich kann mittels der Ermittlung eines Betriebsparameters des Einspritzsystems eine Auswahl der geeigneten Kraftstoffwahl verbessert werden.

Es ist erfindungsgemäß bevorzugt, dass eine Kraftstoff-Freigabebedingung verwendet wird, welche einen Druck und/oder eine Temperatur und/oder eine relative Lage, insbesondere einen Winkel, und/oder eine Funktionstüchtigkeit der kraftstoffartrelevanten Funktion aufweist. Das Erfassen dieser Parameter kann mit einfachen technischen Mitteln sowie kostengünstig erfolgen. Es können beispielsweise Sensoren verwendet werden, welche bereits in herkömmlichen Antriebssystemen standardmäßig zum Einsatz kommen. Weisen beispielsweise Einlassdüsen für einen gasförmigen Kraftstoff eine untere Grenztemperatur - beispielsweise um die -30°C - auf, droht ein Einfrieren der Einlassdüsen. Beim Detektieren derartiger Temperaturen ist beispielsweise ein flüssiger Kraftstoff wählbar, bei welchem ein derartiges Problem nicht auftritt. Mittels derartiger Parameter ist eine Vielzahl unterschiedlicher kraftstoffartrelevanter Betriebsparameter erfassbar, sodass eine Auswahl einer besonders geeigneten Kraftstoffart mit einfachen Mitteln sowie kostengünstig verbessert ist.

Weiter bevorzugt weist das vordefinierte Auswahlkriterium eine Priorisierung von Kraftstoffarten auf. Eine Priorisierung von Kraftstoffarten legt beispielsweise fest, welche Kraftstoffart im Zweifel, also wenn bei dem aktuellen Betriebszustand des Antriebssystems mehrere verschiedene Kraftstoffarten verwendbar sind, bevorzugt werden soll. Hierfür können erfindungsgemäß unterschiedliche Priorisierungskriterien zugrunde gelegt werden, wie zum Beispiel Kraftstoffkosten, Kraftstoffverfügbarkeit, Reichweite, Emissionen, zu erwartende Kraftstoffarteinschränkungen, Motorleistung oder dergleichen. Gemäß dem Priorisierungskriterium "Kraftstoffkosten" wird vorzugsweise eine Kraftstoffart gewählt, mit welcher ein Antrieb des Kraftfahrzeugs am günstigsten ist. Auf diese Weise sind Betriebskosten des Kraftfahrzeugs reduzierbar. Das Priorisierungsmerkmal "Kraftstoffverfügbarkeit" berücksichtigt Tankinhalte des Kraftfahrzeugs bei der Priorisierung der Kraftstoffart. Hierbei werden vorzugsweise auch Entfernungen zu Tankstellen berücksichtigt. Besteht beispielsweise die Möglichkeit, innerhalb einer gewissen Reichweite nur eine bestimmte Kraftstoffart zu tanken, kann diese Kraftstoffart höher priorisiert werden. Auf diese Weise kann verhindert werden, dass eine Kraftstoffart aufgebraucht wird und nicht mehr zur Verfügung steht, wenn eine Verwendung dieser Kraftstoffart besonders vorteilhaft wäre. Das Priorisierungsmerkmal "Reichweite" ermöglicht die bevorzugte Verwendung von Kraftstoffarten, welche einen geringen Verbrauch pro gefahrene Strecke aufweisen, sodass insbesondere bei längeren Autofahrten eine Kraftstoffart priorisierbar ist, welche besonders wenige Tankstopps erfordert. Gemäß dem Priorisierungsmerkmal "Emissionen" kann beispielsweise eine Kraftstoffart priorisiert werden, welche besonders geringe Emissionen aufweist. Dies kann beispielsweise in Städten oder Naturschutzgebieten vorteilhaft sein, insbesondere um etwaigen Fahrverboten zu entgehen. Das Priorisierungsmerkmal "zu erwartende Kraftstoffarteinschränkungen" betrifft eine Prädiktion auf einen zukünftigen Betriebszustand des Kraftfahrzeugs, in welchem nur eine bestimmte Kraftstoffart verwendbar ist, sodass vorher vorzugsweise eine alternative Kraftstoffart höher priorisiert wird. Gemäß dem Priorisierungsmerkmal "Motorleistung" kann zum Beispiel eine Kraftstoffart priorisiert werden, mittels welcher eine besonders hohe Leistung abrufbar ist, beispielsweise zum Fahren in einem Sport-Modus. Die Priorisierungsmerkmale können beispielsweise manuell vom Fahrer, über Einstellungen eines Fahrerprofils, über Informationen eines Navigationssystems des Kraftfahrzeugs, aus Informationen über Verkehrsbedingungen, insbesondere in Bezug auf Verkehrsaufkommen, Schadstoffwerte in der Luft, Feinstaubwerte, Temperaturen, Niederschläge oder dergleichen festgelegt bzw. aktualisiert werden. Eine Priorisierung hat somit den Vorteil, dass mit einfachen Mitteln eine Auswahl einer besonders geeigneten Kraftstoffart verbessert ist.

In einer besonders bevorzugten Ausgestaltung der Erfindung kann bei einem Verfahren vorgesehen sein, dass als Kraftstoffart mindestens ein gasförmiger, insbesondere CNG, und mindestens ein flüssiger Kraftstoff, insbesondere Benzin, verwendet werden. Derartige Kraftstoffarten haben den Vorteil, einer hohen Verfügbarkeit sowie unterschiedlicher Eignung für verschiedene Betriebszustände, sodass hiermit gute Synergieeffekte erzielbar sind.

Es ist bevorzugt, dass das Übermitteln der die ausgewählte Kraftstoffart bezeichnenden Information von der zentralen Kraftstoffkoordinationsvorrichtung an eine zentrale Betriebsartenkoordinationsvorrichtung der zentralen Motorkoordinationsvorrichtung erfolgt, wobei die zentrale Betriebsartenkoordinationsvorrichtung zum Bestimmen einer bevorzugten Betriebsart des Antriebssystems ausgebildet ist. In diesem Fall weist die zentrale Motorkoordinationsvorrichtung die zentrale Kraftstoffkoordinationsvorrichtung, die zentrale Betriebsartenkoordinationsvorrichtung sowie die zentrale Motorsteuerungsvorrichtung auf. Die zentrale Betriebsartenkoordinationsvorrichtung ist zur Bestimmung einer Betriebsart der Verbrennungskraftmaschine ausgebildet, um somit beispielsweise konkurrierende Funktionen, wie Diagnosen und das Reinigen eines Partikelfilters durch Abbrennen, zu koordinieren. Auf diese Weise sind Informationen über die einzelnen Vorrichtungen jeweils zentral zusammenführbar sowie verteilbar, sodass eine Anbindung weiterer Funktionen an ein bestehendes Antriebssystem mit einfachen Mitteln sowie kostengünstig vereinfacht ist.

Vorzugsweise wird die Information über die ausgewählte Kraftstoffart von der zentralen Motorkoordinationsvorrichtung, insbesondere der zentralen Motorsteuerungsvorrichtung, an die kraftstoffartrelevanten Funktionen und/oder nicht-kraftstoffrelevanten Funktionen des Antriebssystems weitergeleitet. Auf diese Weise können die kraftstoffartrelevanten Funktionen bzw. nicht-kraftstoffrelevanten Funktionen beispielsweise besser auf die gewählte Kraftstoffart abgestimmt werden. Ferner kann auf diese Weise vermieden werden, dass einzelne kraftstoffrelevante Funktionen einen Betriebszustand einnehmen, welcher für die Verwendung der ausgewählten Kraftstoffart nicht oder nur schlecht geeignet ist. Somit sind ein störungsfreier Betrieb sowie ein Gesamtwirkungsgrad des Antriebsystems mit einfachen Mitteln sowie kostengünstig verbesserbar.

Gemäß einem zweiten Aspekt der Erfindung wird die Aufgabe durch ein Antriebssystem für ein Kraftfahrzeug gelöst. Das Antriebssystem weist eine Verbrennungskraftmaschine und eine zentrale Motorkoordinationsvorrichtung mit einer zentralen Motorsteuerungsvorrichtung zum Betreiben der Verbrennungskraftmaschine auf, wobei die Verbrennungskraftmaschine für den Betrieb mit verschiedenen Kraftstoffarten ausgebildet ist. Erfindungsgemäß weist die zentrale Motorkoordinationsvorrichtung eine zentrale Kraftstoffkoordinationsvorrichtung auf, welche zum Abfragen von Betriebsparametern kraftstoffartrelevanter Funktionen des Antriebssystems und zum Auswählen einer geeigneten Kraftstoffart auf Basis der abgefragten Betriebsparameter ausgebildet ist. Es ist weiter bevorzugt, dass das Antriebssystem für unterschiedliche Kraftstoffarten jeweils eine separate Kraftstoffeinlassvorrichtung aufweist. Die zentrale Kraftstoffkoordinationsvorrichtung ist ausgebildet, Betriebsparametern kraftstoffartrelevanter Funktionen des Antriebssystems, insbesondere direkt von den einzelnen kraftstoffartrelevanten Funktionen abzufragen, insbesondere in Form von Bits. Die zentrale Kraftstoffkoordinationsvorrichtung ist vorzugsweise ausgebildet, das Abfragen in Form von Pull-Abfragen und/oder Push-Abfragen, insbesondere bei einer Veränderung von Betriebsparametern der jeweiligen kraftstoffartrelevanten Funktion, durchzuführen. Ferner ist die zentrale Kraftstoffkoordinationsvorrichtung vorzugsweise ausgebildet, auf Basis der abgefragten Betriebsparameter und vordefinierten Kraftstoff-Freigabebedingungen mögliche Kraftstoffarten zum Betreiben der Verbrennungskraftmaschine zu ermitteln. Weiter bevorzugt ist die zentrale Kraftstoffkoordinationsvorrichtung ausgebildet, aus den ermittelten möglichen Kraftstoffarten eine Kraftstoffart, welche in der Verbrennungskraftmaschine umgesetzt werden soll, auszuwählen sowie Informationen, welche die ausgewählte Kraftstoffart bezeichnen, an eine zentrale Motorsteuerungsvorrichtung der Motorkoordinationsvorrichtung, insbesondere in Form von Bits bzw. eines Bits, zu übermitteln.

Bei dem beschriebenen Antriebssystem ergeben sich sämtliche Vorteile, die bereits zu einem Verfahren zum Betreiben einer Verbrennungskraftmaschine eines Antriebssystems für ein Kraftfahrzeug gemäß dem ersten Aspekt der Erfindung beschrieben worden sind. Demnach hat das erfindungsgemäße Antriebssystem gegenüber herkömmlichen Antriebssystemen den Vorteil, dass mit einfachen Mitteln sowie auf eine kostengünstige Art und Weise eine Auswahl einer für aktuelle Betriebsparameter optimierten Kraftstoffart gewährleistet ist. Zudem ist eine komplizierte direkte Kommunikationsanbindung der Motorsteuerungsvorrichtung an die einzelnen kraftstoffartrelevanten Funktionen durch eine zentrale Bündelung über die zentrale Kraftstoffkoordinationsvorrichtung nicht mehr erforderlich. Die Integration neuer Kraftstoffarten in einem bestehenden Antriebssystem ist ebenfalls verbessert.

Es ist besonders bevorzugt, dass die zentrale Motorkoordinationsvorrichtung eine zentrale Betriebsartenkoordinationsvorrichtung zum Bestimmen einer bevorzugten Betriebsart des Antriebssystems aufweist, wobei das Antriebssystem zur Durchführung eines erfindungsgemäßen Verfahrens ausgebildet ist. Die zentrale Motorsteuerungsvorrichtung, die zentrale Betriebsartenkoordinationsvorrichtung und die zentrale Kraftstoffkoordinationsvorrichtung sind vorzugsweise über Datenschnittstellen zum Datenaustausch miteinander gekoppelt.

Gemäß einem dritten Aspekt der Erfindung wird die Aufgabe durch ein Kraftfahrzeug gelöst. Das Kraftfahrzeug weist ein Antriebssystem mit einer Verbrennungskraftmaschine und einer zentralen Motorkoordinationsvorrichtung zum Betreiben der Verbrennungskraftmaschine auf, wobei die Verbrennungskraftmaschine für den Betrieb mit verschiedenen Kraftstoffarten ausgebildet ist. Erfindungsgemäß ist das Antriebssystem gemäß einem erfindungsgemäßen Antriebssystem ausgebildet.

Bei dem beschriebenen Kraftfahrzeug ergeben sich sämtliche Vorteile, die bereits zu einem Verfahren zum Betreiben einer Verbrennungskraftmaschine eines Antriebssystems für ein Kraftfahrzeug gemäß dem ersten Aspekt der Erfindung sowie zu einem Antriebssystem für ein Kraftfahrzeug gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise eine Auswahl einer für aktuelle Betriebsparameter optimierten Kraftstoffart gewährleistet ist. Zudem ist eine komplizierte direkte Kommunikationsanbindung der Motorsteuerungsvorrichtung an die einzelnen kraftstoffartrelevanten Funktionen durch eine zentrale Bündelung über die zentrale Kraftstoffkoordinationsvorrichtung nicht mehr erforderlich. Die Integration neuer Kraftstoffarten in einem bestehenden Antriebssystem ist ebenfalls verbessert.

Ein erfindungsgemäßes Verfahren, ein erfindungsgemäßes Antriebssystem sowie ein erfindungsgemäßes Kraftfahrzeug werden nachfolgend anhand von Zeichnungen näher erläutert. Es zeigen jeweils schematisch:
- Figur 1: in einem Ablaufdiagramm eine bevorzugte Ausführungsform eines erfindungsgemäßen Verfahrens, und
- Figur 2: in Seitenansicht eine bevorzugte Ausführungsform eines erfindungsgemäßen Kraftfahrzeugs mit einem erfindungsgemäßen Antriebssystem.

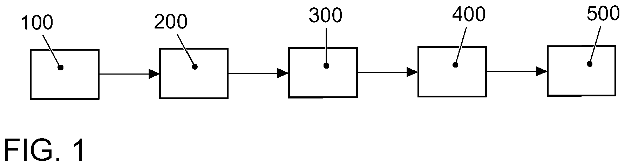

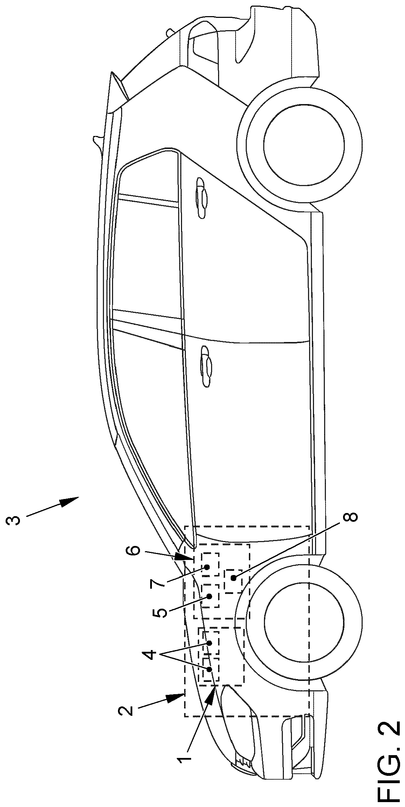

Elemente mit gleicher Funktion und Wirkungsweise sind in den Fig. 1 und 2 jeweils mit denselben Bezugszeichen versehen.

In Fig. 1 ist eine bevorzugte Ausführungsform eines erfindungsgemäßen Verfahrens schematisch in einem Ablaufdiagramm dargestellt. In einem ersten Verfahrensschritt 100 werden Betriebsparameter kraftstoffartrelevanter Funktionen 4 (vgl. Fig. 2) des Antriebssystems 2 (vgl. Fig. 2) mittels einer zentralen Kraftstoffkoordinationsvorrichtung 5 (vgl. Fig. 2) einer zentralen Motorkoordinationsvorrichtung 6 (vgl. Fig. 2) eines Kraftfahrzeugs 3 (vgl. Fig. 2) abgefragt. Das Abfragen kann beispielsweise im Push- oder Pull-Verfahren sowie kontinuierlich oder diskontinuierlich erfolgen. In einem zweiten Verfahrensschritt 200 werden mögliche Kraftstoffarten zum Betreiben der Verbrennungskraftmaschine 1 auf Basis der abgefragten Betriebsparameter und vordefinierter Kraftstoff-Freigabebedingungen mittels der zentralen Kraftstoffkoordinationsvorrichtung 5 ermittelt. Die Kraftstoff-Freigabebedingungen legen fest, welche Kraftstoffart bei welchen Betriebsparametern einer kraftstoffrelevanten Funktion 4 verwendbar ist. In einem dritten Verfahrensschritt 300 wird mittels der zentralen Kraftstoffkoordinationsvorrichtung 5 eine Kraftstoffart zum Betreiben der Verbrennungskraftmaschine 1 ausgewählt. Die Auswahl erfolgt auf Basis der ermittelten möglichen Kraftstoffarten sowie mindestens eines vordefinierten Auswahlkriteriums. Das Auswahlkriterium legt beispielsweise fest, welche Kraftstoffart ausgewählt werden soll, wenn die ermittelten Betriebsparameter die Verwendung mehrerer verschiedener Kraftstoffarten zulassen. Besteht aufgrund der Betriebsparameter nur die Möglichkeit der Auswahl einer Kraftstoffart, ist das mindestens eine vordefinierte Auswahlkriterium entbehrlich. In einem vierten Verfahrensschritt 400 wird mittels der zentralen Kraftstoffkoordinationsvorrichtung 5 eine Information, welche die ausgewählte Kraftstoffart bezeichnet, an eine zentrale Motorsteuerungsvorrichtung 7 der zentralen Motorkoordinationsvorrichtung 6 übermittelt. Die Übermittlung erfolgt vorzugsweise über eine hierfür ausgebildete Datenschnittstelle. Anschließend wird die Verbrennungskraftmaschine 1 in einem fünften Verfahrensschritt 500 mittels der zentralen Motorsteuerungsvorrichtung 7 der zentralen Motorkoordinationsvorrichtung 6 mit der ausgewählten Kraftstoffart betrieben.

In Fig. 2 ist eine bevorzugte Ausführungsform eines erfindungsgemäßen Kraftfahrzeugs 3 mit einem erfindungsgemäßen Antriebssystem 2 schematisch in einer Seitenansicht abgebildet. Das Antriebssystem 2 weist eine Verbrennungskraftmaschine 1 mit einer Mehrzahl kraftstoffrelevanter Funktionen 4, wie zum Beispiel einer Drosselklappe, einer Nockenwelle, einer Einspritzvorrichtung oder dergleichen, und eine zentrale Motorkoordinationsvorrichtung 6 zum Steuern der Verbrennungskraftmaschine 1 auf. Die zentrale Motorkoordinationsvorrichtung 6 weist eine zentrale Kraftstoffkoordinationsvorrichtung 5 zum Abfragen von Betriebsparametern kraftstoffartrelevanter Funktionen 4 des Antriebssystems 2, zum Ermitteln möglicher Kraftstoffarten zum Betreiben der Verbrennungskraftmaschine 1 auf Basis der abgefragten Betriebsparameter und vordefinierter Kraftstoff-Freigabebedingungen, zur Auswahl einer Kraftstoffart zum Betreiben der Verbrennungskraftmaschine 1 auf Basis der ermittelten möglichen Kraftstoffarten sowie mindestens eines vordefinierten Auswahlkriteriums sowie zum Übermitteln einer die ausgewählte Kraftstoffart bezeichnenden Information an die zentrale Motorsteuerungsvorrichtung 7 der zentralen Motorkoordinationsvorrichtung 6 auf. Ferner weist die zentrale Motorkoordinationsvorrichtung 6 eine zentrale Motorsteuerungsvorrichtung 7 zum Steuern der Verbrennungskraftmaschine 1 und eine zentrale Betriebsartenkoordinationsvorrichtung 8 zur Bestimmung einer Betriebsart des Antriebssystems 2 auf.

### Bezugszeichenliste

- 1: Verbrennungskraftmaschine
- 2: Antriebssystem
- 3: Kraftfahrzeug
- 4: kraftstoffartrelevante Funktion
- 5: zentrale Kraftstoffkoordinationsvorrichtung
- 6: zentrale Motorkoordinationsvorrichtung
- 7: zentrale Motorsteuerungsvorrichtung
- 8: zentrale Betriebsartenkoordinationsvorrichtung

- 100: erster Verfahrensschritt
- 200: zweiter Verfahrensschritt
- 300: dritter Verfahrensschritt
- 400: vierter Verfahrensschritt
- 500: fünfter Verfahrensschritt

## Patentansprüche

1. Verfahren zum Betreiben einer Verbrennungskraftmaschine (1) eines Antriebssystems (2) für ein Kraftfahrzeug (3), wobei die Verbrennungskraftmaschine (1) für den Betrieb mit verschiedenen Kraftstoffarten ausgebildet ist, aufweisend die folgenden Schritte:
- Abfragen von Betriebsparametern kraftstoffartrelevanter Funktionen (4) des Antriebssystems (2) mittels einer zentralen Kraftstoffkoordinationsvorrichtung (5) einer zentralen Motorkoordinationsvorrichtung (6),
- Ermitteln möglicher Kraftstoffarten zum Betreiben der Verbrennungskraftmaschine (1) auf Basis der abgefragten Betriebsparameter und vordefinierter Kraftstoff-Freigabebedingungen mittels der zentralen Kraftstoffkoordinationsvorrichtung (5),
- Auswahl einer Kraftstoffart zum Betreiben der Verbrennungskraftmaschine (1) auf Basis der ermittelten möglichen Kraftstoffarten sowie mindestens eines vordefinierten Auswahlkriteriums mittels der zentralen Kraftstoffkoordinationsvorrichtung (5),
- Übermitteln einer die ausgewählte Kraftstoffart bezeichnenden Information von der zentralen Kraftstoffkoordinationsvorrichtung (5) an eine zentrale Motorsteuerungsvorrichtung (7) der zentralen Motorkoordinationsvorrichtung (6), und
- Betreiben der Verbrennungskraftmaschine (1) mit der ausgewählten Kraftstoffart mittels der zentralen Motorsteuerungsvorrichtung (7).

2. Verfahren nach Anspruch 1,
**dadurch gekennzeichnet,**
**dass** beim Abfragen der Betriebsparameter mittels der zentralen Kraftstoffkoordinationsvorrichtung (5) als kraftstoffartrelevante Funktion (4) eine Drosselklappe und/oder eine Nockenwelle und/oder ein Turbolader und/oder ein Einspritzsystem verwendet werden.

3. Verfahren nach Anspruch 1 oder 2,
**dadurch gekennzeichnet,**
**dass** eine Kraftstoff-Freigabebedingung verwendet wird, welche einen Druck und/oder eine Temperatur und/oder eine relative Lage, insbesondere einen Winkel, und/oder eine Funktionstüchtigkeit der kraftstoffartrelevanten Funktion (4) aufweist.

4. Verfahren nach einem der vorangegangenen Ansprüche,
**dadurch gekennzeichnet,**
**dass** das vordefinierte Auswahlkriterium eine Priorisierung von Kraftstoffarten aufweist.

5. Verfahren nach einem der vorangegangenen Ansprüche,
**dadurch gekennzeichnet,**
**dass** als Kraftstoffart mindestens ein gasförmiger, insbesondere CNG, und mindestens ein flüssiger Kraftstoff, insbesondere Benzin, verwendet werden.

6. Verfahren nach einem der vorangegangenen Ansprüche,
**dadurch gekennzeichnet,**
**dass** das Übermitteln der die ausgewählte Kraftstoffart bezeichnenden Information von der zentralen Kraftstoffkoordinationsvorrichtung (5) an eine zentrale Betriebsartenkoordinationsvorrichtung (8) der zentralen Motorkoordinationsvorrichtung (6) erfolgt, wobei die zentrale Betriebsartenkoordinationsvorrichtung (8) zum Bestimmen einer bevorzugten Betriebsart des Antriebssystems (2) ausgebildet ist.

7. Verfahren nach einem der vorangegangenen Ansprüche,
**dadurch gekennzeichnet,**
**dass** die Information über die ausgewählte Kraftstoffart von der zentralen Motorkoordinationsvorrichtung (6), insbesondere einer zentralen Motorsteuerungsvorrichtung (7), an die kraftstoffartrelevanten Funktionen (4) und/oder nicht-kraftstoffrelevante Funktionen des Antriebssystems (2) weitergeleitet wird.

8. Antriebssystem (2) für ein Kraftfahrzeug (3), aufweisend eine Verbrennungskraftmaschine (1) und eine zentrale Motorkoordinationsvorrichtung (6) mit einer zentralen Motorsteuerungsvorrichtung (7) zum Betreiben der Verbrennungskraftmaschine (1), wobei die Verbrennungskraftmaschine (1) für den Betrieb mit verschiedenen Kraftstoffarten ausgebildet ist,
**dadurch gekennzeichnet,**
**dass** die zentrale Motorkoordinationsvorrichtung (6) eine zentrale Kraftstoffkoordinationsvorrichtung (5) aufweist, welche zum Abfragen von Betriebsparametern kraftstoffartrelevanter Funktionen (4) des Antriebssystems (2) und zum Auswählen einer geeigneten Kraftstoffart auf Basis der abgefragten Betriebsparameter ausgebildet ist.

9. Antriebssystem (2) nach Anspruch 8,
**dadurch gekennzeichnet,**
**dass** die zentrale Motorkoordinationsvorrichtung (6) eine zentrale Betriebsartenkoordinationsvorrichtung (8) zum Bestimmen einer bevorzugten Betriebsart des Antriebssystems (2) aufweist, wobei das Antriebssystem (2) zur Durchführung eines Verfahrens nach einem der Ansprüche 1 bis 7 ausgebildet ist.

10. Kraftfahrzeug (3), aufweisend ein Antriebssystem (2) mit einer Verbrennungskraftmaschine (1) und einer zentralen Motorkoordinationsvorrichtung (6) zum Betreiben der Verbrennungskraftmaschine (1), wobei die Verbrennungskraftmaschine (1) für den Betrieb mit verschiedenen Kraftstoffarten ausgebildet ist,
**dadurch gekennzeichnet,**
**dass** das Antriebssystem (2) gemäß einem Antriebssystem (2) nach Anspruch 8 oder 9 ausgebildet ist.
